# EUROPEAN PATENT APPLICATION

(11) **EP 3 992 785 A1**
(43) Date of publication of application: **04.05.2022**
(21) Application number: 20831328.8
(22) Date of filing: 23.06.2020
(51) Int. Cl.: G06F 9/44

(54) **METHOD AND APPARATUS FOR ACQUIRING COMMAND LINE MULTIWAY TREE OF DATA NETWORK DEVICE**

(30) Priority: 25.06.2019 CN 201910554820
(71) Applicant: ZTE Corporation, Shenzhen, Guangdong 518057 (CN)
(72) Inventor: LIU, Fengping, Shenzhen, Guangdong 518057 (CN)
(74) Representative: WBH Wachenhausen Patentanwälte PartG mbB
(86) International application number: PCT/CN2020/097570
(87) International publication number: WO 2020/259460

(57) **Abstract**

A method and an apparatus for acquiring a command line multi-way tree of a data network device are disclosed. The method includes: pushing acquired value(s) of first-layer command line node(s) of a data network device into a stack for storage and sequentially traversing each command line node in the first-layer command line node(s), pushing acquired value(s) of second-layer command line node(s) into the stack for storage and sequentially traversing each command line node in the second-layer command line node(s), and executing by that analogy to obtain all layers and all command line nodes of the entire command line multi-way tree; and, upon acquiring the command line multi-way tree, for nodes in a complete path of the command line multi-way tree, performing tracing from the lowermost-layer command line node(s) to the uppermost-layer command line node(s) in a stack popping manner to generate a complete command for storage, until all command lines of the entire command line multi-way tree are acquired.

## Description

### TECHNICAL FIELD

The present disclosure relates to, but not limited to, the field of data network devices, and in particular to a method and apparatus for acquiring a command line multi-way tree of a data network device.

### BACKGROUND

In the existing technology, most data network devices support command line input. Command lines are an important means for users and maintainers to use and maintain devices. However, the command manuals of most data network devices are very huge, and the expression of command line statements is relatively obscure. Particularly in many docking application scenarios, if a user is unfamiliar with a command line interface of a certain device, configuration and use may be difficult.

### SUMMARY

Embodiments of the present disclosure provide a method and an apparatus for acquiring a command line multi-way tree of a data network device, in order to solve the problem in the existing technology that it is difficult to configure and use a certain device when a user is unfamiliar with a command line interface of the device.

An embodiment of the present invention provides a method for acquiring a command line multi-way tree of a data network device, including: pushing acquired value(s) of first-layer command line node(s) of a data network device into a stack for storage and sequentially traversing each command line node in the first-layer command line node(s), pushing acquired value(s) of second-layer command line node(s) of the data network device into the stack for storage and sequentially traversing each command line node in the second-layer command line node(s), and executing by that analogy to obtain all layers and all command line nodes of the entire command line multi-way tree; and, upon acquiring the command line multi-way tree, for nodes in a complete path of the command line multi-way tree, performing tracing from the lowermost-layer command line node(s) to the uppermost-layer command line node(s) in a stack popping manner to generate a complete command for storage, until all command lines of the entire command line multi-way tree are acquired.

An embodiment of the present disclosure further provides an apparatus for acquiring a command line multi-way tree of a data network device, including a command line multi-way tree traversing unit and a command line multi-way collection unit. The command line multi-way tree traversing unit is configured to push acquired value(s) of first-layer command line node(s) of a data network device into a stack for storage and sequentially traverse each command line node in the first-layer command line node(s), push acquired value(s) of second-layer command line node(s) of the data network device into the stack for storage and sequentially traverse each command line node in the second-layer command line node(s), and execute by that analogy to obtain all layers and all command line nodes of the entire command line multi-way tree. The command line multi-way collection unit is configured to upon acquiring the command line multi-way tree, for nodes in a complete path of the command line multi-way tree, perform tracing from the lowermost-layer command line node(s) to the uppermost-layer command line node(s) in a stack popping manner to generate a complete command for storage, until all command lines of the entire command line multi-way tree are acquired.

An embodiment of the present disclosure further provides an apparatus for acquiring a command line multi-way tree of a data network device, including: a memory, a processor and a computer program that is stored on the memory and executable by the processor, where the computer program, when executed by the processor, causes the processor to perform the steps in the method for acquiring a command line multi-way tree of a data network device described above.

An embodiment of the present disclosure further provides a computer-readable storage medium storing a computer program which, when executed by a processor, cause the processor to perform the steps in the method for acquiring a command line multi-way tree of a data network device described above.

The foregoing description merely shows the summary of the technical schemes of the present disclosure, which may be implemented in accordance with the contents in this description in order to make the technical means of the present disclosure clearer. In addition, in order to make the above and other objectives, features and advantages of the present disclosure more apparent, the specific implementations of the present disclosure will be illustrated hereinafter.

### BRIEF DESCRIPTION OF DRAWINGS

Various other advantages and benefits will become apparent to a person having ordinary skills in the art by reading the following detailed description of the preferred embodiments. The accompanying drawings are merely used for illustrating the preferred embodiments, rather than limiting the present disclosure. In addition, throughout the accompanying drawings, like reference numerals indicate like components, in which:
FIG. 1 is a flowchart of a method for acquiring a command line multi-way tree of a data network device according to an embodiment of the present disclosure;
FIG. 2 is a flowchart of a method for acquiring a command line multi-way tree of a data network device according to an embodiment of the present disclosure;
FIG. 3 is a schematic diagram of numbering command lines according to an embodiment of the present disclosure;
FIG. 4 is a schematic diagram of an apparatus for acquiring a command line multi-way tree of a data network device according to an embodiment of the present disclosure; and
FIG. 5 is a schematic diagram of an apparatus for acquiring a command line multi-way tree of a data network device according to another embodiment of the present disclosure.

### DETAILED DESCRIPTION

In order to solve the problems in the existing technology, for data network devices that support command line input, such as switches, router devices and testers, the technical schemes in the embodiments of the present disclosure are employed. After a device is connected, command lines are automatically collected and processed according to an input prompt of the command lines to generate a command multi-way tree, and the command multi-way tree is then processed to generate a command line manual that is numbered by a tree structure, thereby ensuring that the command lines of the device can be quickly mastered.

The embodiments of the present disclosure will be described in more detail below in conjunction with the accompanying drawings. Although the embodiments of the present disclosure are illustrated in the accompanying drawings, it should be understood that the present disclosure may be implemented in various forms and should not be limited by the embodiments described herein. Rather, these embodiments are provided to understand the present disclosure more thoroughly and fully convey the scope of the present disclosure to those having ordinary skills in the art.

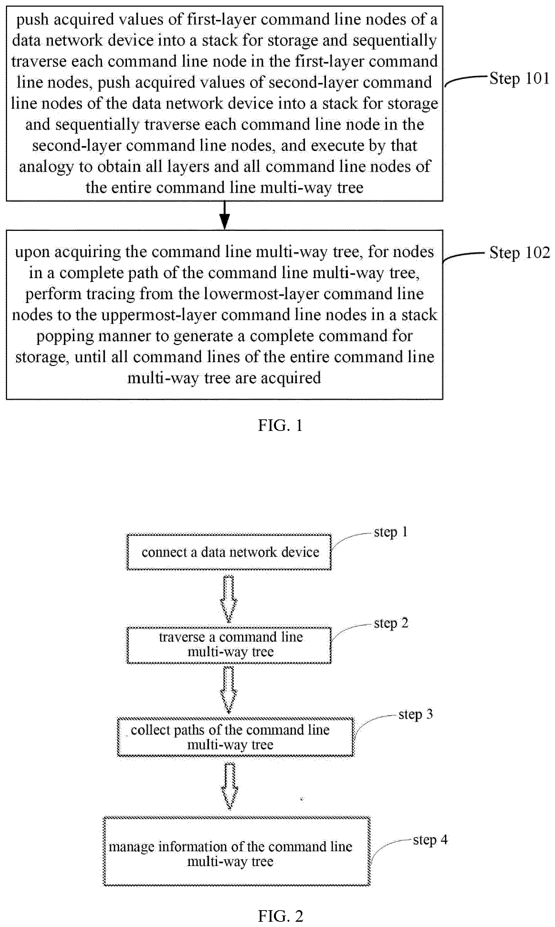

According to an embodiment of the present disclosure, a method for acquiring a command line multi-way tree of a data network device is provided. FIG. 1 is a flowchart of the method for acquiring a command line multi-way tree of a data network device according to this embodiment of the present disclosure. As shown in FIG. 1, the method for acquiring a command line multi-way tree of a data network device according to this embodiment of the present disclosure includes the following steps.

At step 101, acquired value(s) of first-layer command line node(s) of a data network device is/are pushed into a stack for storage, and each command line node in the first-layer command line node(s) is sequentially traversed; acquired value(s) of second-layer command line node(s) of the data network device is/are pushed into the stack for storage, and each command line node in the second-layer command line node(s) is sequentially traversed; and, execution is performed by that analogy to obtain all layers and all command line nodes of the entire command line multi-way tree. The value of a command line node in the command line multi-way tree specifically includes: the command line node itself, and/or data corresponding to the command line node automatically generated according to prompt information.

At 101, the step of pushing acquired values of command line nodes of the data network device into the stack for storage specifically includes: in response to a command line node being that a user is required to fill data, data corresponding to the command line node is automatically generated according to the prompt content of the command line node. In addition, in practical applications, the values of command line nodes may be pushed into the stack for storage in an order of prompt displaying of command line nodes or in a customized order.

That is, at step 101, the command line multi-way tree is tentatively traversed. In an embodiment, after a user uses a telnet or serial interface to connect a data network product, a question mark or other query statements are input to view command line nodes in a first layer, and these nodes are pushed into the stack for storage as first-layer nodes of the multi-way tree. These nodes may be stored in a prompt displaying order from the top down. Here, it is determined according to the requirements whether a sorting operation is performed. For example, sorting may be continuously performed in an alphabetical order, etc. The sorting operation will not increase the implementation difficulty. Subsequently, a first node in a set of first-layer nodes of the command line tree is accessed, and then next-layer nodes of this node are viewed. These nodes are pushed into the stack for storage as a subset of second-layer nodes of the multi-way tree. All nodes in the set of first-layer nodes are sequentially traversed to obtain all sets of second-layer nodes of the command line multi-way tree. For the processing of node values, some nodes are one specific word, while some nodes are one piece of data to be filled by the user. The range and format of the data will be displayed in the prompt. At this time, the system will regularly match the prompted content to generate a data fill-in that conforms to the prompt description. Thus, each node of the multi-way tree is definite and issuable specific data. According to the description in the above paragraphs, all layers and all nodes of the entire command line multi-way tree are covered.

At step 102, upon acquiring the command line multi-way tree, nodes in a complete path of the command line multi-way tree are traced from the lowermost-layer command line node(s) to the uppermost-layer command line node(s) in a stack popping manner to generate a complete command for storage, until all command lines of the entire command line multi-way tree are acquired.

At step 102, the complete path includes: a path between a starting node and a final node of command line collection determined according a user's instruction; or, a path naturally formed from the lowermost-layer command line node to the uppermost-layer command line node of the entire command line multi-way tree. That is, the user may set the starting point of command line collection according to the user's needs. For example, if the user is only concerned with command lines under router bgp, the starting collection point may be set as router bgp 100, so that the collection scope is controllable and the efficiency is higher.

That is, at step 102, information collection of the command line multi-way tree is mainly performed. In practical implementations, the steps 101 and 102 may be performed simultaneously. A command line is collected from the root of the multi-way tree, until this path ends. It is to be noted that, the path only goes from an upper layer to a lower layer, and there is no reverse path, while parallel layers do not access to each other. On the premise of the above description, when a certain path ends, nodes by which this path passes are immediately collected, and tracing is performed from a tail end to the root of the tree in a stack popping manner to generate a complete command line. Then, the complete command line is stored in the layer where the last node is located.

In this embodiment of the present disclosure, in order to better manage command lines, after all command lines of the entire command line multi-way tree are acquired, all command lines of the entire command line multi-way tree may also be numbered, and all the numbered command lines are stored. In practical applications, all command lines of the entire command line multi-way tree may be sequentially numbered according to the layers and branches to which the command lines belong. Finally, all the numbered command lines may be stored in the form of tables, files or databases according to the requirements.

The above processing is mainly managing the information of the command line multi-way tree. At steps 101 and 102, the command line multi-way tree of the entire data network device has been completely exposed, and a corresponding subset of command lines is generated according to the layers and branches of the multi-way tree. The command line(s) in this subset may be numbered according to the layers and branches. For example, if a command line ends at a second branch of the first layer, this command line is numbered as 1.2; and, if a command line ends at a third branch, this command line is numbered as 1.3. For another example, if a command line ends at a third branch of a second layer, this command line is numbered as 2.3, and so on. All command lines have unique numbers. Thus, it is clear in logic and easy to manage, and it is also very convenient for subsequent expansion and edition into files in various formats.

The technical schemes in this embodiment of the present disclosure will be illustrated below in conjunction with the accompanying drawings. FIG. 2 is a flowchart of the detailed processing of the method for acquiring a command line multi-way tree of a data network device according to an embodiment of the present disclosure. As shown in FIG. 2, the method for acquiring a command line multi-way tree of a data network device according to this embodiment of the present disclosure includes the following steps.

At step 1, a data network device is connected.

At step 2, a question mark ("?") is input to view command line nodes in a first layer, and these nodes are pushed into a stack for storage as first-layer nodes of a multi-way tree. These nodes may be stored in a prompt displaying order from the top down. Here, it may be determined according to the requirements whether a sorting operation is performed (for example, sorting may be continuously performed in an alphabetical order, etc., without increasing the implementation difficulty). In this embodiment of the present disclosure, sorting is optional, and it is defaulted to not perform sorting. A first node in the set of first-layer nodes of the command line tree is accessed, and a question mark is input to view next-layer nodes of this node. These nodes are pushed into the stack for storage as a first subset of second-layer nodes of the multi-way tree. In a similar way, all nodes in the set of first-layer nodes are sequentially traversed to obtain all sets of second-layer nodes of the command line multi-way tree. It is to be noted that, the path only goes from an upper layer to a lower layer, and there is no reverse path, while parallel layers do not access to each other.

In an embodiment, at step 2, for the processing of node values, some nodes are one or more specific words or phrases, while some nodes are one piece of data to be filled by the user. The range and format of the data will be displayed in the prompt. At this time, the system will intelligently analyze the content of the prompt to generate a data fill-in that conforms to the prompt description, which is generally a character string having a specified length range or a numerical value in a numerical range. Thus, the node values of the specific values in the command line tree are determined.

At step 3, all layers and all nodes of the entire command line multi-way tree are traversed, and meanwhile the information of the command line multi-way tree is collected. When a certain path ends, nodes by which this path passes are immediately collected, and tracing is performed from a tail end to the root of the tree in a stack popping manner to generate a complete command line. Then, the complete command line is stored in the layer where the last node is located.

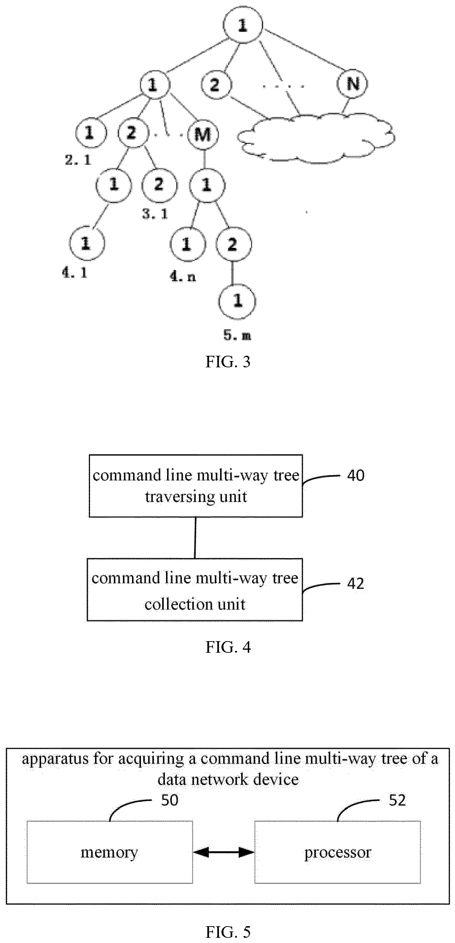

At step 4, the information of the command line multi-way tree is managed. After the command lines are traversed and collected, the acquired information of command lines of the command line multi-way tree needs to be further managed. The command line multi-way tree of the entire data network product has been completely exposed at the previous steps, and corresponding files need to be generated according to the layers and branches of the multi-way tree next. As shown in FIG. 3, the files are numbered according to the layers and branches. For example, if a command line ends at a second branch of the first layer, this command line is numbered as 1.2; and, if a command line ends at a second branch, this command line is numbered as 1.2. For another example, if a command line ends at a third branch of a second layer, this command line is numbered as 2.3, by that analogy. In this way, all command lines have unique numbers. The managed command line sets are clear in logic and easy to manage, and are also very convenient for subsequent expansion and edition into files in various formats customized by the user.

In this embodiment of the present disclosure, it is to be noted that the user may set the starting point of command line collection according to the user's needs. For example, if the user is only concerned with command lines under router bgp, the starting collection point may be set as router bgp 100, and then the collection and processing of subsequent command lines are completed by the method and the system. Thus, the collection scope is controllable, and the efficiency is higher.

In addition, for some command line systems such as tcl or python commonly used by the user, this method may also be used after "?" or -help is input, and a command line manual may be acquired according to the prompt, so that the statements of these languages can be quickly mastered by user, which is greatly helpful for programming.

In conclusion, by means of the technical schemes in this embodiment of the present disclosure, command line systems of multiple layers and multiple branches of the device are intelligently acquired according to the nodes in the layers of the command lines. In addition, in the method for acquiring a command line multi-way tree of a data network device according to this embodiment of the present disclosure, the structure of command lines is represented in the form of a multi-way tree, so that the user can obtain a complete command line manual and can inquire specific command configuration instances through an interface. Therefore, the method for acquiring a command line multi-way tree of a data network device according to this embodiment of the present disclosure improves the service efficiency, shortens the process of getting familiar with command lines of the device, and improves the usability and maintainability of the data network product.

According to an embodiment of the present disclosure, an apparatus for acquiring a command line multi-way tree of a data network device is provided. FIG. 4 is a schematic diagram of the apparatus for acquiring a command line multi-way tree of a data network device according to this embodiment of the present disclosure. As shown in FIG. 4, the apparatus for acquiring a command line multi-way tree of a data network device according to this embodiment of the present disclosure includes a command line multi-way tree traversing unit 40 and a command line multi-way collection unit 42.

The command line multi-way tree traversing unit 40 is configured to: push acquired value(s) of first-layer command line node(s) of a data network device into a stack for storage and sequentially traverse each command line node in the first-layer command line nodes, push acquired value(s) of second-layer command line node(s) of the data network device into the stack for storage and sequentially traverse each command line node in the second-layer command line node(s), and execute by that analogy to obtain all layers and all command line nodes of the entire command line multi-way tree. The value of a command line node in the command line multi-way tree specifically includes: the command line node itself, and/or the data corresponding to the command line node automatically generated according to prompt information.

The command line multi-way tree traversing unit 40 is configured to: in response to a command line node being that a user is required to fill data, automatically generate data corresponding to the command line node according to the prompt content of the command line node. In addition, it is necessary to push the values of command line nodes into the stack for storage in an order of prompt displaying of command line nodes or in a customized order.

That is, the command line multi-way tree traversing unit 40 needs to traverse the layers and nodes of all command lines according to the command line prompt of the data network product, which is equivalent to traversing all paths of command lines.

The command line multi-way collection unit 42 is configured to: upon acquiring the command line multi-way tree, trace nodes in a complete path of the command line multi-way tree from the lowermost-layer command line node(s) to the uppermost-layer command line node(s) in a stack popping manner to generate a complete command for storage, until all command lines of the entire command line multi-way tree are acquired. In an embodiment, the complete path includes: a path between a starting node and a final node of command line collection determined according a user's instruction; or, a path naturally formed from the lowermost-layer command line node to the uppermost-layer command line node of the entire command line multi-way tree.

The command line multi-way collection unit 42 is further configured to perform the following step.

According to the layers and branches to which the command lines belong, all command lines of the entire command line multi-way tree sequentially numbered, and all the numbered command lines are stored.

That is, during the execution process of the command line traversing unit, the command line multi-way tree collection unit 42 synchronously collects these paths and records the layers and nodes where this command is located, where one or more recording points are at a corresponding tail end of the path. The number format of the record is "number.number", for example, 2.1, 3.2, etc. In addition, here, in the setting of node values, the node values conforming to description are set after regular matching is performed according the description information of nodes. The command line multi-way tree collection unit collects complete and issuable command line instances.

In this embodiment of the disclosure, the apparatus may further include following unit.

A command line multi-way tree information filing unit is configured to storage all the numbered command lines in the form of tables, files or databases.

That is, the command line multi-way tree information filing unit performs filing according to the numbers of the commands acquired by the command line collection unit, sequentially compares the numbers and stores the commands in order. In the present disclosure, filing is performed in the form of an excel table, so that the layers and nodes are clear. In addition, many programming languages have calling interfaces for excel files, so that the output of the device is very friendly to the further development and usage.

It is to be noted that the user can set the starting point of command line collection according to the user's needs. For example, if the user is only concerned with command lines under router bgp, the starting collection point may be set as router bgp 100, and then the collection and processing of subsequent command lines are completed by the method and the system. Thus, the collection scope is controllable, and the efficiency is higher.

This embodiment of the present disclosure is an apparatus embodiment corresponding to the above method embodiments, and the related details may be understood in conjunction with the above method embodiments and will not be repeated here.

An embodiment of the present disclosure provides an apparatus for acquiring a command line multi-way tree of a data network device, as shown in FIG. 5, including: a memory 50, a processor 52 and a computer program stored in the memory 50 and executable by the processor 52, where the computer program, when executed by the processor 52, causes the processor 52 to perform the following method steps.

At step 101, acquired value(s) of first-layer command line node(s) of a data network device is/are pushed into a stack for storage, and each command line node in the first-layer command line node(s) is sequentially traversed; acquired value(s) of second-layer command line node(s) of the data network device is/are pushed into the stack for storage, and each command line node in the second-layer command line node(s) is sequentially traversed; and, execution is performed by that analogy to obtain all layers and all command line nodes of the entire command line multi-way tree. The value of a command line node in the command line multi-way tree specifically includes: the command line node itself, and/or data corresponding to the command line node automatically generated according to prompt information.

At 101, the step of pushing acquired values of command line nodes of the data network device into the stack for storage specifically includes: in response to a command line node being that a user is required to fill data, data corresponding to the command line node is automatically generated according to the prompt content of the command line node. In addition, in practical applications, the values of command line nodes may be pushed into the stack for storage in an order of prompt displaying of command line nodes or in a customized order.

That is, at step 101, the command line multi-way tree is tentatively traversed. In an embodiment, after a user uses a telnet or serial interface to connect a data network product, a question mark or other query statements are input to view command line nodes in a first layer, and these nodes are pushed into the stack for storage as first-layer nodes of the multi-way tree. These nodes may be stored in a prompt displaying order from the top down. Here, it may be determined according to requirements whether a sorting operation is performed. For example, sorting may be continuously performed in an alphabetical order, etc. The sorting operation will not increase the implementation difficulty. Subsequently, a first node in a set of first-layer nodes of the command line tree is accessed, and then next-layer nodes of this node are viewed. These nodes are pushed into the stack for storage as a subset of second-layer nodes of the multi-way tree. All nodes in the set of first-layer nodes are sequentially traversed to obtain the set of all second-layer nodes of the command line multi-way tree. For the processing of node values, some nodes are one specific word, while some nodes are one piece of data to be filled by the user. The range and format of the data will be displayed in the prompt. At this time, the system will regularly match the prompted content to generate a data fill-in that conforms to the prompt description. Thus, each node of the multi-way tree is definite and issuable specific data. According to the description in the above paragraphs, all layers and all nodes of the entire command line multi-way tree are covered.

At step 102, upon acquiring the command line multi-way tree, nodes in a complete path of the command line multi-way tree are traced from the lowermost-layer command line node(s) to the uppermost-layer command line node(s) in a stack popping manner to generate a complete command for storage, until all command lines of the entire command line multi-way tree are acquired.

At step 102, the complete path includes: a path between a starting node and a final node of command line collection determined according a user's instruction; or, a path naturally formed from the lowermost-layer command line node to the uppermost-layer command line node of the entire command line multi-way tree. That is, the user can set the starting point of command line collection according to the user's needs. For example, if the user is only concerned with command lines under router bgp, the starting collection point may be set as router bgp 100, so that the collection scope is controllable and the efficiency is higher.

That is, at step 102, information collection of the command line multi-way tree is mainly performed. In practical implementations, the steps 101 and 102 may be performed simultaneously. A command line is collected from the root of the multi-way tree, until this path ends. It is to be noted that, the path only goes from an upper layer to a lower layer, and there is no reverse path, while parallel layers do not access to each other. On the premise of the above description, when a certain path ends, nodes by which this path passes are immediately collected, and tracing is performed from a tail end to the root of the tree in a stack popping manner to generate a complete command line. Then, the complete command line is stored in the layer where the last node is located.

In this embodiment of the present disclosure, in order to better manage command lines, after all command lines of the entire command line multi-way tree are acquired, all command lines of the entire command line multi-way tree may also be numbered, and all the numbered command lines are stored. In practical applications, all command lines of the entire command line multi-way tree may be sequentially numbered according to the layers and branches to which the command lines belong. Finally, all the numbered command lines may be stored in the form of tables, files or databases according to the requirements.

The above processing is mainly managing the information of the command line multi-way tree. At steps 101 and 102, the command line multi-way tree of the entire data network device has been completely exposed, and a corresponding command line subset is generated according to the layers and branches of the multi-way tree. The command line(s) in this subset may be numbered according to the layers and branches. For example, if a command line ends at a second branch of the first layer, this command line is numbered as 1.2; and, if a command line ends at a third branch, this command line is numbered as 1.3. For another example, if a command line ends at a third branch of a second layer, this command line is numbered as 2.3, and so on. All command lines have unique numbers. Thus, it is clear in logic and easy to manage, and it is also very convenient for subsequent expansion and edition into files in various formats.

An embodiment of the present disclosure provides a computer-readable storage medium storing a computer program which, when executed by a processor 52, causes the processor 52 to perform the following method steps.

At step 101, acquired value(s) of first-layer command line node(s) of a data network device is/are pushed into a stack for storage, and each command line node in the first-layer command line node(s) is sequentially traversed; acquired value(s) of second-layer command line node(s) of the data network device is/are pushed into the stack for storage, and each command line node in the second-layer command line node(s) is sequentially traversed; and, execution is performed by that analogy to obtain all layers and all command line nodes of the entire command line multi-way tree. The value of a command line node in the command line multi-way tree specifically includes: the command line node itself, and/or data corresponding to the command line node automatically generated according to prompt information.

At 101, the step of pushing acquired values of command line nodes of the data network device into the stack for storage specifically includes: in response to a command line node being that a user is required to fill data, data corresponding to the command line node is automatically generated according to the prompt content of the command line node. In addition, in practical applications, the values of command line nodes may be pushed into the stack for storage in an order of prompt displaying of command line nodes or in a customized order.

That is, at step 101, the command line multi-way tree is tentatively traversed. In an embodiment, after a user uses a telnet or serial interface to connect a data network product, a question mark or other query statements are input to view command line nodes in a first layer, and these nodes are pushed into the stack for storage as first-layer nodes of the multi-way tree. These nodes may be stored in a prompt displaying order from the top down. Here, it may be determined according to requirements whether a sorting operation is performed. For example, sorting may be continuously performed in an alphabetical order, etc. The sorting operation will not increase the implementation difficulty. Subsequently, a first node in a set of first-layer nodes of the command line tree is accessed, and then next-layer nodes of this node are viewed. These nodes are pushed into the stack for storage as a subset of second-layer nodes of the multi-way tree. All nodes in the set of first-layer nodes are sequentially traversed to obtain the set of all second-layer nodes of the command line multi-way tree. For the processing of node values, some nodes are one specific word, while some nodes are one piece of data to be filled by the user. The range and format of the data will be displayed in the prompt. At this time, the system will regularly match the prompted content to generate a data fill-in that conforms to the prompt description. Thus, each node of the multi-way tree is definite and issuable specific data. According to the description in the above paragraphs, all layers and all nodes of the entire command line multi-way tree are covered.

At step 102, upon acquiring the command line multi-way tree, nodes in a complete path of the command line multi-way tree are traced from the lowermost-layer command line node(s) to the uppermost-layer command line node(s) in a stack popping manner to generate a complete command for storage, until all command lines of the entire command line multi-way tree are acquired.

At step 102, the complete path includes: a path between a starting node and a final node of command line collection determined according a user's instruction; or, a path naturally formed from the lowermost-layer command line node to the uppermost-layer command line node of the entire command line multi-way tree. That is, the user can set the starting point of command line collection according to the user's needs. For example, if the user is only concerned with command lines under router bgp, the starting collection point may be set as router bgp 100, so that the collection scope is controllable and the efficiency is higher.

That is, at step 102, information collection of the command line multi-way tree is mainly performed. In practical implementations, the steps 101 and 102 may be performed simultaneously. A command line is collected from the root of the multi-way tree, until this path ends. It is to be noted that, the path only goes from an upper layer to a lower layer, and there is no reverse path, while parallel layers do not access to each other. On the premise of the above description, when a certain path ends, nodes by which this path passes are immediately collected, and tracing is performed from a tail end to the root of the tree in a stack popping manner to generate a complete command line. Then, the complete command line is stored in the layer where the last node is located.

In this embodiment of the present disclosure, in order to better manage command lines, after all command lines of the entire command line multi-way tree are acquired, all command lines of the entire command line multi-way tree may also be numbered, and all the numbered command lines are stored. In practical applications, all command lines of the entire command line multi-way tree may be sequentially numbered according to the layers and branches to which the command lines belong. Finally, all the numbered command lines may be stored in the form of tables, files or databases according to the requirements.

The above processing is mainly managing the information of the command line multi-way tree. At steps 101 and 102, the command line multi-way tree of the entire data network device has been completely exposed, and a corresponding command line subset is generated according to the layers and branches of the multi-way tree. The command line(s) in this subset may be numbered according to the layers and branches. For example, if a command line ends at a second branch of the first layer, this command line is numbered as 1.2; and, if a command line ends at a third branch, this command line is numbered as 1.3. For another example, if a command line ends at a third branch of a second layer, this command line is numbered as 2.3, and so on. All command lines have unique numbers. Thus, it is clear in logic and easy to manage, and it is also very convenient for subsequent expansion and edition into files in various formats.

In this embodiment, the computer-readable storage medium includes, but not limited to, ROM, RAM, magnetic disk, optical disk, etc.

Apparently, it should be understood by those having ordinary skills in the art that, the modules or steps in the present disclosure may be implemented by a general computing device, and may be integrated in a single computing device or distributed on a network consisting of a plurality of computing devices. Optionally, they may be implemented by program codes that can be executed by a computing device, so that they may be stored in a storage device and executed by the computing device. In addition, in some cases, the shown or described steps may be executed in an order different from the order described herein. Alternatively, the modules or steps are implemented by integrated circuit modules, respectively, or some of the modules or steps are implemented by single integrated circuit modules, respectively. Therefore, the present disclosure is not limited to any particular combination of hardware and software.

The foregoing description merely shows the preferred embodiments of the present disclosure and is not intended to limit the present disclosure. Various alterations and variations may be made to the present disclosure by those having ordinary skills in the art. Any modifications, equivalent replacements and improvements made without departing from the principle of the present disclosure shall fall into the protection scope of the present disclosure.

## Claims

1. A method for acquiring a command line multi-way tree of a data network device, comprising:
pushing acquired values of first-layer command line nodes of a data network device into a stack for storage and sequentially traversing each command line node in the first-layer command line nodes, pushing acquired values of second-layer command line nodes into the stack for storage and sequentially traversing each command line node in the second-layer command line nodes, and executing by that analogy to obtain all layers and all command line nodes of the entire command line multi-way tree; and
upon acquiring the command line multi-way tree, for nodes in a complete path of the command line multi-way tree, performing tracing from the lowermost-layer command line nodes to the uppermost-layer command line nodes in a stack popping manner to generate a complete command for storage, until all command lines of the entire command line multi-way tree are acquired.

2. The method of claim 1, wherein the step of pushing acquired values of command line nodes of the data network device into the stack comprises:
in response to a command line node requiring data filled by user, automatically generating data corresponding to the command line node according to prompt content of the command line node.

3. The method of claim 1, after the step of acquiring all command lines of the entire command line multi-way tree, further comprising:
according to the layers and branches to which the command lines belong, sequentially numbering all command lines of the entire command line multi-way tree, and storing all the numbered command lines.

4. The method of claim 1, wherein the complete path comprises:
a path between a starting node and a final node of command line collection determined according a user's instruction; or
a path naturally formed from the lowermost-layer command line node to the uppermost-layer command line node of the entire command line multi-way tree.

5. The method of claim 1, wherein the step of pushing acquired values of command line nodes of the data network device into the stack comprises:
pushing values of command line nodes into the stack for storage in an order of prompt displaying of command line nodes or in a customized order.

6. The method of claim 3, wherein the step of storing all the numbered command lines comprises:
storing all the numbered command lines in the form of tables, files or databases.

7. An apparatus for acquiring a command line multi-way tree of a data network device, comprising a command line multi-way tree traversing unit and a command line multi-way collection unit, wherein:
the command line multi-way tree traversing unit is configured to push acquired values of first-layer command line nodes of a data network device into a stack for storage and sequentially traverse each command line node in the first-layer command line nodes, push acquired values of second-layer command line nodes into the stack for storage and sequentially traverse each command line node in the second-layer command line nodes, and execute by that analogy to obtain all layers and all command line nodes of the entire command line multi-way tree; and
the command line multi-way collection unit is configured to upon acquiring the command line multi-way tree, for nodes in a complete path of the command line multi-way tree, perform tracing from the lowermost-layer command line nodes to the uppermost-layer command line nodes in a stack popping manner to generate a complete command for storage, until all command lines of the entire command line multi-way tree are acquired.

8. The apparatus of claim 7, wherein the command line multi-way tree traversing unit is further configured to:
in response to a command line node requiring data filled by user, automatically generate data corresponding to the command line node according to the prompt content of the command line node.

9. The apparatus of claim 7, wherein the command line multi-way tree collection unit is further configured to:
according to the layers and branches to which the command lines belong, sequentially number all command lines of the entire command line multi-way tree, and store all the numbered command lines.

10. The apparatus of claim 7, wherein the complete path comprises:
a path between a starting node and a final node of command line collection determined according a user's instruction; or
a path naturally formed from the lowermost-layer command line node to the uppermost-layer command line node of the entire command line multi-way tree.

11. The apparatus of claim 7, wherein the command line multi-way tree traversing unit is further configured to:
pushing values of command line nodes into the stack for storage in an order of prompt displaying of command line nodes or in a customized order.

12. The apparatus of claim 9, further comprising:
a command line multi-way tree information filing unit configured to storage all the numbered command lines in the form of tables, files or databases.

13. An apparatus for acquiring a command line multi-way tree of a data network device, comprising: a memory, a processor and a computer program that are stored in the memory and executable by the processor, wherein the computer program, when executed by the processor, causes the processor to perform the steps in the method for acquiring a command line multi-way tree of a data network device of any one of claims 1 to 6.

14. A computer-readable storage medium storing a computer program which, when executed by a processor, causes the processor to perform the steps in the method for acquiring a command line multi-way tree of a data network device of any one of claims 1 to 6.
